# EUROPEAN PATENT APPLICATION

(11) **EP 0 819 410 A1**
(43) Date of publication of application: **21.01.1998**
(21) Application number: 97112123.1
(22) Date of filing: 16.07.1997
(51) Int. Cl.: A61C 8/00

(54) **Dental implant and related milling cutter for implant seating**

(30) Priority: 19.07.1996 IT MI961517
(71) Applicant: Biemmi, Lucia, 28053 Castelletto Ticino (NO) (IT)
(72) Inventor: Biemmi, Lucia, 28053 Castelletto Ticino (NO) (IT)
(74) Representative: Coloberti, Luigi

(57) **Abstract**

A dental implant of embedded or semi-embedded screw type. The implant (10) comprises a smooth cylindrical neck (12) for a dental prosthesis, and a threaded shank (11) having a conical core (13); the conical core (13) directly extends from the cylindrical neck (12) of the implant and is provided with a single-start cylindrical thread (16) having a diameter corresponding to that of the neck (12). The thread (16) is starting from the neck (12) and extends forwards over a longitudinally extending cut portion (17), terminating in the close vicinity of the front end of the threaded shank (11).

## Description

### FIELD OF THE INVENTION

The present invention relates to improvements to dental implants; more precisely it relates to a dental implant of the embedded or semi-embedded screw type, as well as to a special milling cutter necessary for preparing the receiving seat therefor.

### PRIOR ART

At present substantially two types of screw implant exist: the first one, called "standard-screw implant" is already provided with the normal stump portion for subsequent fastening of a dental prosthesis, while the second one is normally known as "embedded" or "semi-embedded" screw implant provided with a suitable bore for subsequent screwing of a stump for fastening the prosthesis. The use of one or other type of implant depends on specific choices made by the doctor in connection with the need to adapt to different implant conditions.

Dental implants of embedded or semi-embedded screw type in turn may be divided into: implants with fine-pitch screw and implants with long-pitch screw; the invention relates to improvements to this latter type of dental implant.

Dental implants of this type which are presently in use, substantially comprise a smooth neck portion having a slightly conical shape, which extends into a shank portion provided with a thread having a wide sharp-edge profile, of the self-threading type, in which the external diameter of the thread is greater than that of the smooth part of the upper neck.

Implants of this type generally require complex drilling and tapping operations for preparation of the receiving seat; these operations must be performed with the greatest care and attention in order to prevent imperfect adhesion of the screw shank to the receiving seat in the bone which is due, for example, to defects in alignment between the initial hole and the subsequent tapping operation necessary for preparing the seat for the screw thread, causing problems or difficulties in terms of rapid healing.

Moreover, in screw implants of the type mentioned above, alignment defects during the drilling and tapping operations, may cause unstable conditions of the implant which, once screwed in, produces an irregular distribution of the loads which in this case are mainly concentrated on the single thread of the screw.

It is in fact known that the intra-oral kinematics are somewhat complex and influenced by many factors including phonation, swallowing and in particular chewing, so that any imperfections in formation of the implant cavity negatively influence the stability of the implant.

IT-A-1,237,496 also discloses some types of embedded-screw implants which require the use of one or more single or multiple-start threads, with varying thread pitches.

Although these screws have proved to be suitable for specific applications, in general the accentuated conicity of the threaded shank thereof and the small initial diameter of the conical core, compared to the neck for fastening the stump of the prosthesis, in certain conditions of use could give rise to some problems.

In particular, according to a first example of this patent, the use of a long-pitch cylindrical thread which terminates at a considerable space from the front end of the threaded shank, necessarily requires a separate operation for tapping the conical hole which receives the implant, an operation which must be performed by a special tool after initial drilling. Consequently, in this type of implant as well there may be problems of instability and poor distribution of the loads for the reasons mentioned above.

Moreover, the presence in this type of implant of a conical connecting part between the rear end of the conical core and the neck for the fastening stump of the dental prosthesis, may cause local weakening of the implant due to the fact that the relative ratio of the external diameters of the neck, the frustoconical connecting part and the internal hexagonal hole for the introduction of a screwing tool, would leave at the bottom of said hexagonal hole an extremely small wall thickness which would not always be capable of withstanding the considerable stresses caused by chewing or defective contact of a tooth against a dental prosthesis fastened to such an implant.

The main object of the present invention is to provide a dental implant of embedded or semi-embedded screw type which is designed to allow easy implantation thereof, as well as a high degree of stability, ensuring, as a result of its special design, homogeneous multi-directional distribution of the loads which in this case are completely supported by the conical shank of the implant, without influencing or affecting at all the turns of the thread.

A further object of the present invention is to provide a dental implant of embedded or semi-embedded screw type, and an associated drilling tool, which are able to provide a perfectly clean conical seat with a conicity identical to that of the tang of the implant by means of a single drilling operation.

Yet another object of the present invention is to provide a suitable tool for drilling and milling the implant seat in a single operation and with extreme precision, such as to perfectly reproduce the conical profile of the threaded shank of the implant.

### BRIEF DESCRIPTION OF THE INVENTION

In general, the above may be achieved by means of an embedded or semi-embedded screw implant according to Claim 1, as well as by means of a drilling and milling tool according to Claim 6.

Therefore, according to a first aspect of the invention, an implant has been provided of embedded or sub-merged screw type comprising a neck portion provided with fastening means for a dental prosthesis, and a threaded shank axially extending from said neck, said threaded shank having a conical core tapering from the neck portion towards a front end and provided with a single-start thread, characterized in that the neck portion of the implant is provided with a cylindrical smooth outer surface having a diameter, and in that the conical core is provided with a cylindrical thread directly extending from the neck portion of the implant, said cylindrical thread having an outer diameter corresponding to the outer diameter of the neck portion of the implant and extending with the same outer diameter up to the front end of the threaded shank.

According to another aspect of the invention, a drilling and milling tool has been provided for the seat of the dental implant referred to above, said tool comprising an elongated body provided with a rear-wardly extending stem for attachment to an operating device, said body comprising a rear cylindrical portion having a diameter corresponding to the outer diameter of the neck portion of the dental implant, as well as comprising a front milling portion having a drilling end tip, said front milling portion of the tool being provided with linear cutting edges, said cutting edges of the front milling portion longitudinally extending for a length and being provided with an outer conical shape corresponding to the length and to the conical shape of the threaded shank portion of the dental implant.

### BRIEF DESCRIPTION OF THE DRAWINGS

These and further features of the dental implant and the drilling and milling tool according to the invention will be described hereinbelow with reference to the accompanying drawings, in which:
- Fig. 1 is a view of the implant showing the general features;
- Fig. 2 is a view from the rear end, along the line 2-2 of Figure 1;
- Fig. 3 is a view from the front end, along the line 3-3 of Figure 1;
- Fig. 4 is a longitudinal sectional view of the implant of Figure 1;
- Fig. 5 is a side view, on a different scale, of a first drilling and milling tool designed for an implant according to a first embodiment of the invention;
- Fig. 6 is a side view of the tool in a plane at 90° from that of Figure 5;
- Fig. 7 is a view from the front end of the tool according to figure 5;
- Fig. 8 is a view from the rear end of the tool according to Figure 5;
- Fig. 9 is a side view, on a different scale, of a second embodiment of a tool according to the invention;
- Fig. 10 is a side view of the tool in a plane at 90° from that of Figure 9;
- Fig. 11 is a view from the front end of the tool according to Figure 9;
- Fig. 12 is a sectional view along the line 12-12 of Fig. 9.

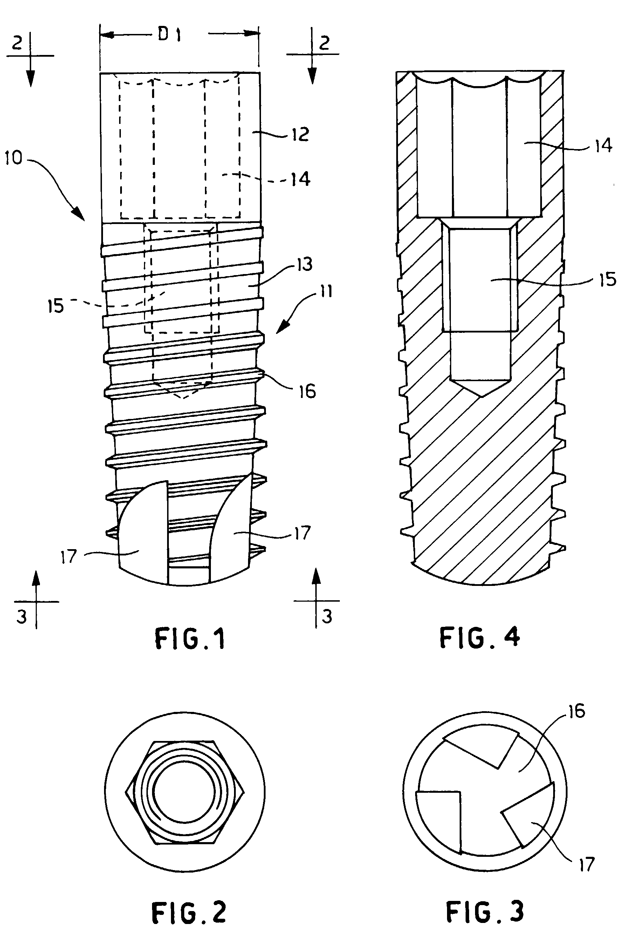

With reference now to Figures 1 to 4, we shall describe the screw implant according to the invention.

The screw implant, wholly indicated by reference 10, substantially consists of an elongated metal body, for example made of titanium, comprising a threaded shank 11 provided at its rear end with a smooth cylindrical neck portion 12 suitable for the insertion of a stump for the fastening of a dental prosthesis.

The cylindrical neck portion 12 extends directly into a conical core 13 tapering towards the front end, starting with the same diameter D1 of neck 12 so as to avoid the formation of intermediate connecting surfaces or steps between the neck 12 and the conical core 13 of the dental implant.

This makes it possible to achieve a high mechanical strength, in particular at the transition point between the neck 12 and the rear end of the conical core 13; however, in order to improve the stability of the implant, once it has been inserted into the receiving cavity of a bone, tapering the core 13 has a small conicity for example of between 2.5° and 5°, depending on the length of the core itself; in general, larger conicity are used for short implants or smaller conicity for longer implants so as to prevent excessive weakening of the implant at the bottom of an hexagonal hole 14 of the neck portion 12 necessary for insertion of a tool for screwing of the implant itself and as a seat for the fastening stump of a dental prosthesis.

In Figs. 1 and 4, reference number 15 denotes a threaded internal hole axially extending into the shank 11 from the hexagonal hole 17 of the neck, by means of which it is possible to removably fasten the stump for the dental prosthesis, after the same implant 10 has been definitively inserted and screwed into its implant cavity.

The shank 11 of the implant, as clearly shown in Figures 1 and 4, is provided with a cylindrical thread 16 having a trapezoidal profile, the external diameter of which corresponds exactly to the outer diameter of the smooth neck portion 12 of the implant.

The single-start thread 16 therefore extends on the conical core 13 of the shank from a point close to the cylindrical neck 12, forwards with a constant pitch and a gradually varying depth so as to terminate in the close vicinity of the front end of the shank 11, where the latter has three longitudinal cut surfaces 17 angularly spaced and axially extending over at least a pair of pitches, to interrupt two or more threads; these cut surfaces are required to provide the front end of the shank 11 with a self-threading action and to receive any fragments of drilled bone, and allow definitive fastening of the implant in the corresponding conical receiving seat, acting, together with the new bone which forms there, to prevent unscrewing of the implant.

As previously mentioned, the thread 16 has a trapezoidal cross-sectional shape which may be obtained with a cutting tool kept at a constant angle; therefore the depth of the thread gradually increases from the neck 12 of the implant towards the front end of the shank, gradually reducing the width of its flat crest.

This design of the thread and the conical core enable the implant cavity to be provided in the form of a milled hole having the same conicity and the same diameters as the conical core of the implant shank.

This provides the implant, once it has been inserted, with a high degree of stability and allows homogeneous distribution of the loads in all directions since they are transmitted mainly onto the conical surfaces making contact between the core 13 and the hole of the implant cavity.

As mentioned initially, a perfect conicity of the implant cavity, corresponding to the conicity of the core 13 of the threaded shank of the implant, is critical for ensuring stable anchoring of the implant and homogeneous distribution of the loads.

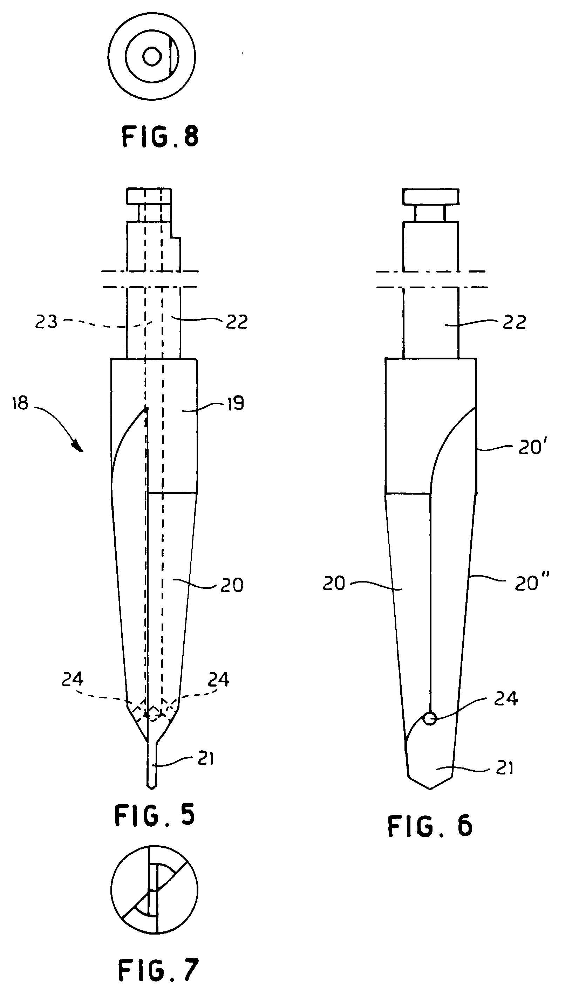

This may be obtained in an extremely simple manner by means of a milling and drilling or boring tool of the type shown in Figures 5 to 8, and 9 to 12, respectively, of the accompanying drawings.

In the first example according to Figures 5 to 8, the body of the milling tool comprises a cylindrical portion 19 which has exactly the same outer diameter as the neck 12 of the implant which extends into a frustoconical drilling portion 20 having the same conicity as the threaded shank 11 of the implant.

More precisely, the drilling portion 20 comprises two cutting edges having a first rectilinear section 20', which is parallelly arranged to the longitudinal axis of the tool and which extends on the cylindrical portion 19 over a length substantially equal to that of the neck 12 of the implant, and a second rectilinear section 20'' on the drilling portion 20 forming an angle with the axis of the tool equal to that of the conical core of the implant, the cutting edges 20'' longitudinally extending into the tip part 21 of the tool which forms the initial bore of the implant cavity.

In Figures 5 and 6, reference number 22 denotes a stem member for attachment of the milling cutter 18 to an operating device, while 23 denotes a longitudinal hole which longitudinally extends from the rear end of the stem 22, opening at 24 in the vicinity of the front end of the milling cutter for circulation of a sterile cooling liquid.

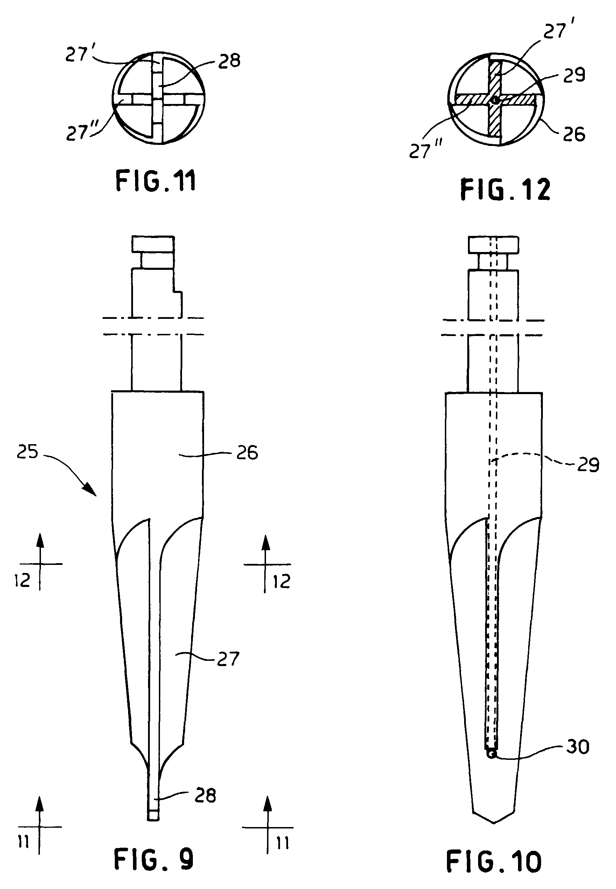

Figures 9 to 12 show a second embodiment of the tool according to the invention. In this case also the tool 25 comprises a cylindrical portion 26 having a diameter corresponding to the diameter of the neck 12 of the implant, followed by a milling part 27 provided with four conically shaped cutting edges having a conicity and length identical to that of the conical core 13 of the threaded shank 11 of the implant.

In particular, in the example according to Figures 9 to 12, the milling part 27 is formed by four cross-shaped cutting edges 27' and 27'', two of which extend forwards to form the drilling part 28.

In Figure 10, finally, reference number 29 denotes a longitudinal hole which is open at 30 in the vicinity of the front end of the milling cutter, again for circulation of a cooling liquid.

From what described and illustrated in the drawings it will be understood that a dental implant of the embedded or semi-embedded type and an associated tool for preparation of the implant cavity have been provided, wherein the implant has an extremely simple design and a particularly strong structure, to ensure a high degree of stability for the same implant once it has been inserted into the receiving cavity of a bone, and wherein use is made of a drilling tool by means of which it is possible to obtain, in a unique operation, a perfectly clean conical seat, having a conicity identical to that of the shank of the implant, simplifying in this manner the operations for implantation, as well to ensure short healing times, since a perfect fit of the implant in its seat formed in the bone structure is obtained, eliminating any presence of air which could increase the duration of healing time.

It is understood that the above description and illustration with reference to the accompanying drawings has been provided purely by way of example of the general features of the implant and the drilling and milling tools according to the invention.

## Claims

1. Dental implant of embedded or semi-embedded screw type comprising a neck portion (12) provided with fastening means (14) for a dental prosthesis, and a threaded shank (11) axially extending from said neck (12), said threaded shank (11) having a conical core (13) tapering from the neck portion (12) towards a front end and provided with a single-start thread (16), characterized in that the neck portion (12) of the implant (10) is provided with a cylindrical smooth outer surface having a diameter (D1), and in that the conical core (13) is provided with a cylindrical thread (16) directly extending from the neck portion (12) of the implant, said cylindrical thread (16) having an outer diameter corresponding to the outer diameter (D1) of the neck portion (12) of the implant (10) and extending with the same outer diameter up to the front end of the threaded shank (11).

2. Dental implant according to Claim 1, characterized in that the conical core (13) of the shank (11) has a conicity comprised between 2.5° and 5°.

3. Dental implant according to the preceding claims, characterized in that the thread (16) of the conical shank (11) has a trapezoidal cross-sectional shape.

4. Dental implant according to any one of the preceding claims, characterized in that the threaded shank (11) of the implant (10) has at least one longitudinal cavity (17) at its front end.

5. Dental implant according to Claim 4, characterized in that the cavity (17) extends over a few pitches of the thread (16) of the shank (11).

6. Tool suitable for the preparation of a conical seat for receiving a dental implant (10) according to the preceding claims, characterized by comprising an elongated body (18; 25) provided with a rear-wardly extending stem (22) for attachment to an operating device, said body (18; 25) comprising a rear cylindrical portion (19; 26) having a diameter corresponding to the outer diameter (D1) of the neck portion (12) of the dental implant (10), as well as comprising a front milling portion (20; 27) having a drilling end tip (21, 28), said front milling portion (20; 27) of the tool being provided with linear cutting edges (20''; 27', 27''), said cutting edges (20''; 27', 27'') of the front milling portion longitudinally extending for a length and being provided with an outer conical profile corresponding to the length and the conical profile of the threaded shank portion (11) of the dental implant (10).

7. Tool according to Claim 6, characterized in that the front drilling part (21, 28) and the rear milling part (20) have linear cutting edges (20''; 27', 27'') longitudinally arranged in a plane parallel to the longitudinal axis of the same tool.

8. Tool according to the preceding claims, characterized in that the cutting edges (27', 27'') are provided in planes orthogonally arranged each other and parallelly extending to the longitudinal axis of the tool.

9. Tool according to the preceding claim, characterized in that the tip (21, 28) of the drilling portion comprises cutting edges longitudinally extending from the cutting edges (20''; 27', 27'') of the same conical drilling portion (20, 27) of the tool.

10. Drilling, boring and/or milling tool according to the preceding claims, characterized by comprising a hole (23, 29) for circulation of a sterile cooling fluid, longitudinally extending from the rear portion and opening in the vicinity of the front drilling part (21, 28) of the tool.
